# EUROPEAN PATENT SPECIFICATION

(11) **EP 3 821 704 B1**
(45) Date of publication and mention of the grant of the patent: **06.12.2023**
(21) Application number: 20204808.8
(22) Date of filing: 30.10.2020
(51) Int. Cl.: A01K 1/015

(54) **ANIMAL SHED FLOOR**
TIERSTALLBODEN
PLANCHER DE BATIMENT D'ÉLEVAGE

(30) Priority: 12.11.2019 NL 2024227
(43) Date of publication of application: 19.05.2021
(73) Proprietor: Lely Patent N.V., 3147 PB Maassluis (NL)
(72) Inventor: VAN DEN BERG, Karel, 3147 PB Maassluis (NL); FRANSEN, Renatus Ignatius Josephus, 3147 PB Maassluis (NL)
(74) Representative: Octrooibureau Van der Lely N.V.

(56) References cited:
- WO-A1-2018/096059
- WO-A1-2019/156551
- NL-B1- 2 015 454

## Description

### BACKGROUND OF THE INVENTION

### Field of the invention

The invention relates to an animal-shed floor for separating urine and feces. The invention also relates to an animal shed comprising such a floor. Furthermore, the invention relates to an animal shed system comprising such a floor.

### Description of the related art

Traditionally, cattle is kept in an animal space on a slatted floor with slot-shaped slots opening into an underlying manure cellar. Characteristic of such floors is that the width of the slot opening remains the same in the downward direction or increases along its depth. Feces and urine fall through the slot openings and end up in the manure cellar that serves as storage for the mixture of urine and feces, the so-called slurry. In this slurry, all fertilizer components such as phosphates, fibers, nitrogen are present. The reaction of urine with feces produces ammonia that exits through the slot openings into the shed and eventually to the environment where it has a harmful effect.

Due to regulations and environmental protection, it is desirable to fertilize with individual fertilizer components. To separate slurry into individual manure components is tricky and expensive.

It is known that a perforated stable floor will let urine through to an underlying space. The stable floor is covered with fibrous material. Air with ammonia above the urine is filtered off and passed through an air washer. The aim is to evaporate and remove all ammonia from the urine in this way. Feces stays on top of the floor. A perforated floor has the disadvantage that the holes will be blocked by dirt and the like quite easy.

Patent publication NL2018338 discloses a slatted floor with a walking surface and at least one groove shaped opening that opens up to a manure cellar, and wherein in the groove shaped opening a groove element is inserted to decrease the opening of the groove. The element comprises a profile that fits into the groove, and a hole that allows urine to pass through. However, slatted floors do not have standardized groove sizes, such that for each individual floor a tailored element must be made. In addition, the number of grooves to be provided with such an element is very large due to the size of a stable floor, such that this is very tiresome and heavy work.

NL2015454B also discloses a slatted floor with a walking surface.

It would therefore be desirable to provide a stable floor that alleviates at least some of the perceived inconveniences of the prior art.

### BRIEF SUMMARY OF THE INVENTION

According to the invention, there is provided an animal shed floor according to claim 1 comprising at least one floor element, the element comprising:
- a first and a second surface spaced apart, such that the floor element has a thickness different from zero; and
- multiple through holes extending from the first to the second surface, and having a first cross section in a plane parallel to the first and/or second surface, a second cross section perpendicular to the first and/or second surface, and an interior surface;
wherein the first cross section changes in dimension over the thickness of the floor element, wherein the through hole has a step in the interior surface at a distance different form zero from the first and second surface, thus dividing the through hole into a first partition extending from the first surface to the step, and a second partition extending from the step to the second surface, wherein the through hole comprises an opening that opens out to the first surface, which opening is relatively narrow at at least the first surface, such that urine is allowed to flow into the through hole at the first surface and feces remains on the first surface when the floor is in use.

The animal shed floor is made up of at least one floor element, for example, one or multiple floor elements making up at least part of the animal shed floor. Underneath the animal shed floor, a reservoir for storing manure, urine and/or a mixture thereof called slurry, such as a manure cellar, is provided. The through holes of the floor element open up into the reservoir when the floor element is in use. The floor element has multiple through holes, forming perforations, such that a perforated floor is achieved. The perforations or through holes have dimensions that allow urine to flow through the floor element to the underlying reservoir, when the stable is in use, i.e. when animals are kept in the stable. Because the through hole is relatively narrow at the opening at the first surface, there is only a small connection of the animal space with the underlying reservoir or manure cellar. Vapors such as ammonia remain largely in the reservoir. In addition, the openings at the first surface are so narrow at the first surface that feces cannot easily pass to the reservoir. The larger part of the feces will remain on the shed floor, and can be removed separately from the urine. Removal of the feces can take place by, for example, a manure suction robot or manure slide.

The step may be defined as a sudden change in inner dimensions of the through hole, e.g. a sudden narrowing or widening of the through hole. The step may form a peripheral protrusion extending from the interior surface, preferably an axially symmetrical protrusion.

Furthermore, the through holes, forming the perforations, can form a flow regulator to control an airflow from the shed to the reservoir, such that any ammonia formed on the floor of the shed is sucked into the reservoir, thereby reducing the concentration of ammonia in the shed and therefore reducing the odor in the shed.

The step in the through hole divides the through hole in a first and a second partition that have different dimensions and/or shapes. Preferably, the first surface is a walking surface, and the second surface is a bottom side of the shed floor. Therefore, the first surface is the surface that the animals will walk on, and the second surface faces the reservoir below the shed floor. According to the invention the floor element is made of concrete, and is preferably made of reinforced concrete. Concrete is used in most shed floors, but alternative and suitable materials may be used in non claimed embodiments.

At least the first partition is provided with an insert, wherein the insert is supported by the step and wherein the opening of the insert forms the opening of the through hole.

The opening at the first surface that is relatively narrow can be achieved in several ways. A first way is to have the first partition being narrow enough that urine is allowed to flow to the reservoir through the through hole, and that feces cannot easily pass to the reservoir, i.e. the first partition forms the opening at the first surface. A second way is to provide an insert in at least the first partition to narrow the opening of the through hole, wherein the opening in the insert is narrow enough that feces cannot easily pass to the reservoir, but urine can. It is preferred that the area of the opening at the first surface, whether it is formed by the first partition or by the insert, are smaller than any cross sectional area of the first and/or second partition along the first cross section.

The through hole opens out towards the second surface. Preferably, an opening of the through hole at the second surface is wider than then the opening of the through hole at the first surface.

According to an embodiment, a top side of the insert is flush with the first surface, and a bottom side of the insert faces towards the second surface of the floor. Alternatively, the top side of the insert is off set from the first surface, and a bottom side of the insert faces towards the second surface of the floor. Preferably, the bottom side of the insert is supported by the step in the through hole.

The second partition may be shaped as a frustum, in particular a right frustum, extending from the step to the second surface, forming a truncated Λ (capital letter lambda) or V-shape along the second cross section of the through hole. Alternatively, the second partition may be shaped as a dome, i.e. the upper part of a hollow sphere, extending from the step to the second surface, forming (part of) a semicircle along the second cross section of the through hole. The second partition may be shaped as a cylinder, in particular a right cylinder, extending from the step to the second surface, forming an inverted U-shape, along the second cross section of the through hole.

A frustum is the portion of a 3D-shape (normally a cone or pyramid) that lies between one or two parallel planes cutting the 3D-shape (also known as a solid geometry or solid). A right frustum is a parallel truncation of a right pyramid or right cone. A pyramid is a polyhedron formed by connecting a polygonal base and a point, called the apex. Each base edge and apex form a triangle, called a lateral face. It is a conic solid with polygonal base. A right pyramid has its apex directly above the centroid of its base. A cone is a three-dimensional geometric shape (a solid geometry or solid) that tapers smoothly from a flat base (frequently, though not necessarily, circular) to a point called the apex or vertex. A right circular cone is a cone with a circular base having the axis passing through the apex and the center of the base at right angles to its plane.

The frustum-shaped second partition may have a first base at the height of the step, and a second base at the second surface. In one version, the first base may be the larger base and the second base may be the smaller base, thus forming a frustum that narrows towards the second surface. In a second version, the first base may be the smaller base and the second base may be the larger base, thus forming a frustum that widens towards the second surface. The frustum increases the area of the interior surface of the through hole, and thus the evaporation rate of the urine and thus the formation of ammonia, but may also help to prevent capillary action in the through hole. The interior surface of the through hole at the second partition may also, or alternatively, be threaded, i.e. provided with a spiral shaped carving, to increase the area of the interior surface even further or with similar effect.

Furthermore, the second cross section may have a varying width, because of a changing shape of the through hole along the thickness of the floor element. As such, along the second cross section the width of the first partition may be relatively constant, whereas the width of the second partition may change from relatively narrow extending from and with respect to the first partition, thus forming the step, to relatively wide at the second surface of the floor, which may result in a frustum as described above. The width of the second partition may vary along the second cross section through an angled inner surface of the second partition. For instance, the angle between the inner surface and the second surface may range from about 90 degrees to 55 degrees, i.e. from (almost) perpendicular to the second surface to a slanted orientation. Preferably, the angle between the inner surface and the second surface has a maximum of 30 degrees. When a floor element is made of concrete that is cast in a mold, a suitable draft angle for releasing the floor element from the mold must be taken into account.
Along the second cross section, the width of the second partition at the second surface of the floor may be equal to the width of the first partition. Preferably, along the second cross section the through hole has a width that changes from 15-25 millimeter (mm) at its narrowest to 30-50 mm at its widest. For instance, the width of the second cross section at the step may be 20 mm, and at the second surface 45 mm. The width of the second cross section at the first partition may be between 5 to 60 mm, preferably about 5 to 10 mm, or about 35 to 55 mm, for instance about 40 mm or 50 mm. Hoof prints of animals can be about 50-80mm in length and 40-50 mm in width. It is preferred that the first partition and/or the insert are dimensioned such that a largest dimension, in particular the diameter in case of circular shapes, does not exceed the smallest dimension of the animal hoof.

Preferably, the opening of the through hole that opens out to the first surface has a diameter or a smallest dimension between 5 and 10 millimeter (mm). It is advantageous if the hole is circular with a diameter between 5.0 and 10 mm, preferably between 7.5 and 8.5 mm. It has been established experimentally that a hole or opening of such size on the one hand allows a rapid passage of urine and on the other hand is sufficiently small to prevent feces from passing.

The insert may be plate shaped and may have similar width dimensions as the first partition, such that the insert has a form fit with the first partition. The insert may be cast into the first partition of the through hole, in particular for concrete floors. The insert may be plate shaped with protrusions extending from the insert into the floor, such that the insert is anchored in the floor element. Alternatively, the insert may comprise a plate shaped element provided in and shaped according to the first partition, wherein the plate shaped element comprises the opening, and a chalice shaped lining that extends from the plate shaped element into the second partition, such that the insert lines the interior surface of the through hole. The chalice shaped lining thus provides the frustum shape to the second partition.

It is furthermore advantageous if the plate shaped insert is made of stainless steel. Stainless steel has the advantageous property that it is corrosion-resistant and that feces do not readily attach to it. In addition, the plate-shaped insert ensures that the hole or opening in the insert has a small vertical surface. In general, this vertical surface can serve as an attachment for manure or feces and thus cause blockage. Because the plate-shaped insert is relatively thin and stainless steel is somewhat flexible, the insert will bend upon (partial) accession by an animal's hoof. This bending movement will loosen attached feces. Preferably, the plate shaped insert has a thickness between 0.9 and 2.1 mm and in particular approximately 1.5 mm.

Alternatively, the insert may be removably inserted into the first partition. This makes the insert easy to revise and a replacement of the insert is possible. For this embodiment, the insert may comprise a base and a peripheral wall extending from the base, enclosing an insert interior, wherein an exterior surface of the base forms the top side of the insert, and an exterior surface of the wall faces the interior surface of the through hole, and together forming an exterior surface of the insert, wherein the insert has similar width dimensions as the first partition, such that the insert has a form fit with the first partition. Preferably, the peripheral wall is perpendicular to the top side of the insert on at least one side, i.e.an interior and/or an exterior side.

Alternatively, the insert may disk-shaped, and having a through opening that is aligned with the through hole of the floor, wherein the through opening may be cylindrical, dome-shaped or a frustum-shaped.

Furthermore, the insert may have a cylindrical, a dome-shaped or a frustum-shaped interior that extends within the interior from the opening of the insert to a bottom side of the insert. The exterior wall forms the outer boundary of the shaped interior of the insert. The interior of the insert thus widens out towards the bottom side, thereby preventing capillary action in the opening of the insert, but in addition also increasing the interior surface of the insert.

In an embodiment, the exterior surface of the wall facing the interior surface of the through hole, i.e. the first partition, may comprise protrusions, such that the insert has a clamp fit with the first partition. It is desired that the insert is removable from the through hole, for instance for replacement when the insert is broken or otherwise worn out. However, when the insert is in the through hole, it is desired that the insert remains where it is. Thus, a form fit or clamp fit of the insert in the through hole, in particular in the first partition, is preferred.

Besides stainless steel, the insert can also be made of any suitable material, for instance wood, a plastic, a metal or any combination thereof. Plastic inserts can be made with injection molding or other suitable method of manufacturing. According to the invention, the insert is made of a flexible material, such as relatively thin metal plate material, or of a flexible plastic material. The flexibility of the insert will assist in the removal of any feces in or on the insert, as the insert (and the opening) will deform upon (partial) accession by an animal's hoof. This deformation will loosen attached feces.

In a further embodiment, the interior surface of the through hole is lined with a lining element. The lining element may be formed as described above, with a first and second partition and a step between the partitions. The insert may be removably provided in the first partition that is lined with the lining element. The lining element may be made of a plastic, a metal or any other suitable material, or combinations thereof. The lining element for the through hole is preferably cast into the floor element, either as a unit that is overmolded with concrete or other suitable material to form the floor, or as a lining coating that is applied to the interior surface of the through hole.

According to an embodiment, the multiple through holes are arranged in a pattern across the floor. The pattern may be random, linear, circular, square, a grid, or any other pattern. It is preferred that the number of through holes in the floor is between 20 to 50 through holes per square meter, more preferably between 25 to 35 through holes per square meter, in particular about 30 through holes per square meter. This number of through holes is sufficient to sustain the pressure difference between the shed above the floor and the reservoir below the floor.

Furthermore, the floor element may comprise a gutter formed in the first surface, the gutter extending from one edge to another edge of the floor element, and opening up at each edge, and wherein the through holes are arranged in and along the gutter. It is advantageous if the top side of the insert is lower with respect to the first surface that is the walking surface for the animals. As a result, the chances that the full weight of a leg of an animal will rest on the insert is decreased. This prevents wear and damage to the insert.

The gutter may have a width at least equal to the first partition of the through hole. The through holes may be arranged in a pattern in the gutter, preferably in a linear pattern along the gutter. On each side of the gutter, the first surface may comprise a pattern of intersecting notches having a depth with respect to the first surface, and that open out into the through hole and/or the gutter and/or the edge of the floor element. The first surface may be devoid of the gutter, but may be provided with the notches that are then each directed towards a through hole. To avoid a slippery floor if a flat and smooth first surface, i.e. the walking surface, is used, the notches in the floor may provide some roughness and therefor grip on the floor when it is covered with feces and urine. Furthermore, the notches may enhance the drainage of the urine to the through holes and thus to the reservoir below the floor. As a result, urine from the surrounding area can flow faster through the openings to the reservoir underneath the shed floor, thus allowing fewer emissions of ammonia vapors from the surface of the shed floor. In an embodiment, the through hole comprises a peripheral recess enclosing the first partition at the first surface. Preferably, the peripheral edge of the through hole at the first surface is provided with a peripheral recess opening out into the through hole and towards the first surface. The notches may open out into the peripheral recess of the through hole.

Preferably, the depth of the notches varies along a longitudinal direction of the notches to form a sloping notch, wherein the depth of the notch is at its maximum at an end opening out into the gutter or through hole, for instance in the peripheral recess of the through hole. The depth of the notch at the end may be less or the same as the depth of the gutter or the peripheral recess of the through hole, or level with the top side of the insert.

A sloping notch has the advantage that urine will flow into the gutter or through hole more easily. Furthermore, any airflow towards the through holes may be enhanced by the notches that guide the flow into the gutters and therefore into the through holes. Preferably, the depth of the notch is greater than zero and smaller than 10 millimeter, preferably between 1 and 6 millimeter.

According to a further embodiment, the insert comprises a peripheral first recess at a peripheral edge of the insert and in use opening out towards the first partition. The peripheral first recess of the insert and the peripheral recess provided at the peripheral edge of the through hole may form a channel surrounding (and preferably enclosing) the insert. The insert may further comprise a second recess extending from the peripheral first recess to the opening in the insert along a top side of the insert. The second recess may form a channel for guiding urine into the opening of the insert. The second recess of the insert may be aligned with any of the notches opening out into the through hole.

The floor may be made in one piece at the location of the animal shed, and thus comprising one floor element. Advantageously, the floor may comprise at least two floor elements, wherein each floor element has side edges, and wherein at least a first side edge of a first floor element forms an interface with a second side edge from a second floor element. Building a floor out of more floor elements will allow for manufacturing the floor elements remotely and/or as a prefabricated floor that can be bought off the shelf. The floor elements may be placed edge to edge to form the floor. The edges of the adjacent or neighboring floor elements can form a full interface, i.e. the edges touch across the full edge area, or a partial interface, i.e. the edges tough across a part of the edge area. In the latter case, the edges of the adjacent or neighboring floor elements may form a gutter or groove between the floor elements.

Alternatively, the first side edge of a first floor element has a protrusion extending from the first side edge at the first surface, and wherein the second side edge of the second floor element has a notch extending into the second side edge and the first surface, wherein the protrusion and the notch have accommodating shapes, such that when the protrusion and the notch engage, the first surfaces of the two floor elements are flush. In order to install the floor elements and form a stable floor, at least two opposing edges of the floor element may have engagement means to engage with a neighboring floor element.

The invention also relates to an animal shed comprising a floor as described above.

The invention further relates to an animal shed system with an animal shed floor as described above, or a shed comprising such a floor, wherein the shed system comprises an air extraction device, in particular a blower, for extracting air from underneath the floor. The air extraction device reduces the air pressure, such that air is sucked out of the animal space or shed above the floor. This results in an additional reduction of emissions to the environment. Additionally, the airflow above the floor ensures rapid flow of urine through the holes.

In particular, the animal shed system comprises an air washer coupled to the air extraction device to capture ammonia present in the extracted air. The air washer or scrubber may contain an acid solution, such as sulfuric acid or nitric acid. The air above the liquid layer, which will generally mainly consist of urine, has a high ammonia content. By forcing the air from the reservoir through an air washer, known per se, the ammonia is bound in the scrubber's acid solution.

It has been found experimentally that a particularly advantageous effect is obtained if the air extraction device creates a lower pressure under the floor relative to the pressure above the floor. In particular, wherein the pressure difference is between 0.3 mbar and 1.0 mbar. The air extraction device thus creates a low vacuum under the floor, with a lower pressure than atmospheric pressure. The pressure under the floor is preferably 0.3 to 1.0 mbar lower than atmospheric pressure that is active above the floor.

### BRIEF DESCRIPTION OF THE DRAWINGS

Figure 1 shows schematically an animal shed system according to the invention.
Figure 2 shows several embodiments of the floor element according to the invention.
Figure 3 shows several embodiments of the inserts used in the floor element according to the invention.
Figure 4 shows another embodiment of the floor element according to the invention.
Figure 5 shows several embodiments of engaging two floor elements according to the inventions.
Figure 6 shows a perspective view of a further embodiment of the floor element.
Figure 7 shows a perspective view of another embodiment of the floor element.

### DESCRIPTION OF ILLUSTRATIVE EMBODIMENTS

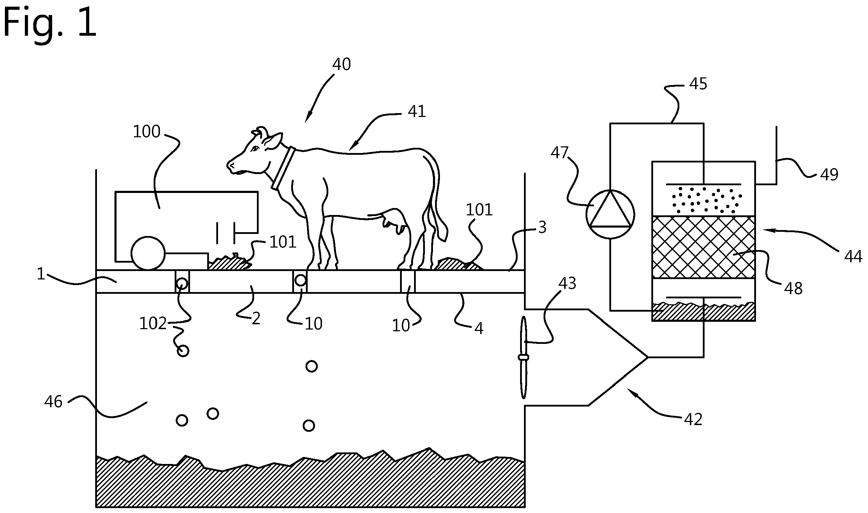

Figure 1 schematically shows an animal shed system 40 according to the invention, comprising a floor 1 for an animal space or shed 41, the floor 1 comprises at least one floor element 2 having a walking surface or first surface 3 and multiple through holes 10 that open up to an underneath reservoir 46, e.g. a manure cellar. The system 40 comprises an air extraction device 42, which can be a fan, in particular a blower 43, for extracting air under the assembly. The system 40 comprises an air washer 44 coupled to the air extraction device 42 to be present in the extracted air to capture ammonia.

The blower 43 provides a low vacuum of approximately 0.7 mbar under atmospheric pressure, which is the difference between the prevailing air pressure in the animal space 41 and the lower pressure in the manure cellar 46 located under the shed floor 1. Because the holes 4 are relatively small and the free space under the shed floor 1 is relatively large, the prevailing pressure in this free space will be relatively constant seen over the entire space. In other words, the pressure gradient in the direction of the blower 43 is small.

The air washer 44 is designed as a packed bed-washing column. Acid absorbent liquid in the form of diluted sulfuric acid or diluted nitric acid is pumped by a pump 47 from underneath a packed bed 48 to a sprayer 45 above the packed bed 48. The ammonia-rich air extracted by the blower 43 is introduced in countercurrent under the packed bed 48 and flows upwards in countercurrent with the absorbent liquid. The absorbent liquid absorbs, among other things, the ammonia and makes it soluble as ammonium. In purified form, the air is conducted via an outlet 49 to the outside environment. The packed bed 48 can be made from different types of fillers and serves to increase the contact surface of the absorbent fluid with the air to be purified. The air washer 44 can also be carried out in transverse flow, wherein the airflow is being lead through the packed bed 48 in a horizontal direction. The packed bed 48 can also be in the form of a cloth over which the absorption liquid runs and the air to be washed is passed through in transverse flow.

After some time, the amount of dissolved ammonia in the absorbent causes a pH increase, such that the absorbent should be replaced. The resulting saturated and still slightly acidic absorption liquid is a nitrogen-containing fertilizer as so-called flushing water. In order to be able to postpone replacement, in an embodiment not shown, the air washer comprises an acid dosing system to be able to keep the pH of the absorption liquid constant.

In addition to ammonia, water vapor from the manure cellar46 will also pass through the air washer 44 and be removed. This will lead to a thickening of the liquid in the manure cellar 46. This liquid is rich in salts; in particular, potassium salts, and is therefore a good potassium fertilizer.

An autonomous manure suction robot 100 runs between the animals over the floor 1. This robot 100 removes solid feces 101 that largely remain on the surface of the floor 1, and then dumps the feces in a separate space, not shown. In an embodiment not shown, the feces 101 are removed by a pulled manure slide. The collected feces 101 can be further processed by, for example, drying or pressing whereby manure fibers are removed from the feces 101. Contact of feces 101 with urine 102 provides an enzymatic conversion reaction of urea in the urine 102 to ammonia. By regularly cleaning the shed floor 1, for example every hour, the feces 101 have no or at least less chance to react with the urine 102. By using a suction robot 100 for this purpose, the feces 101 are removed from the floor 1 on site and the feces 101 are not spread over the floor, which can easily lead to blockage of the holes 10.

Because the feces 101 are not mixed with the urine 102, almost all phosphate remains in the feces and the solids percentage is relatively high. Eventually, the excretion products (feces 101 and urine 102) of a farm animal in the animal space 41 are separated into three parts in a relatively simple manner: phosphate-rich solid feces 101 with a high organic content, a potassium-rich liquid and a nitrogen-rich liquid. These parts can be used for specific fertilization processes and have a value that is higher than that of the slurry that generally results when feces and urine 102 are dumped in a manure cellar together.

In order to achieve that the urine 102 and feces 101 are separated, and in addition that the blower 43 causes a low vacuum in the reservoir 46, a plurality of through holes 10 are needed in the floor 1. Traditional perforations in a concrete animal floor are usually blocked easily by spread-out feces on the floor or other dirt. Enlarging these perforations is not favorable, due to an increased risk of harm to the animals through spraining or fracturing of a leg due to missteps in a perforation. Other solutions, like filling up the slots of an existing slotted floor with profiles having smaller openings, requires tedious, tiresome and expensive work.

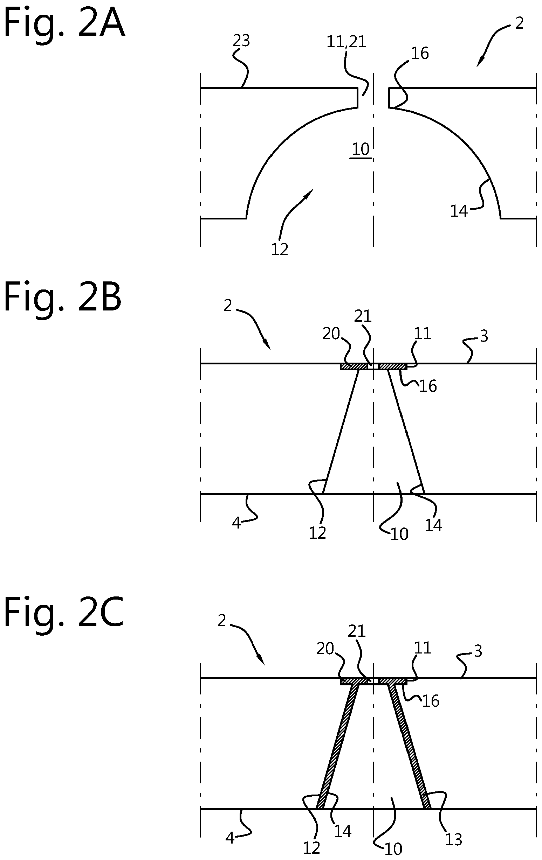

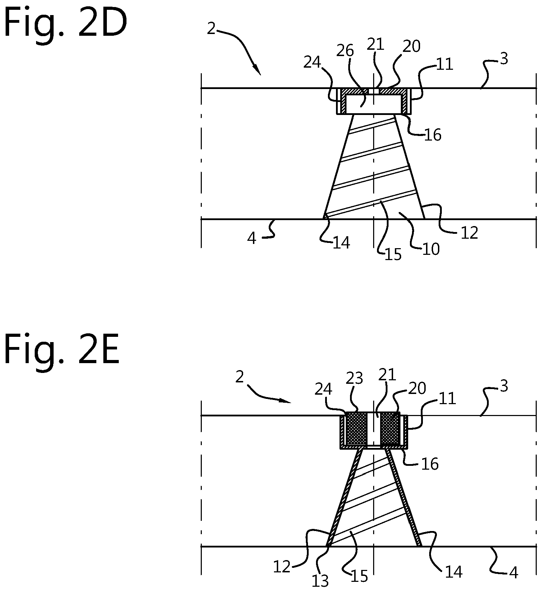

Figure 2 shows several embodiments of the floor element according to the invention that can solve the problems of the traditional floors used in animal sheds. The floor 1 of the shed system shown in Fig. 1 comprises at least one floor element 2. The floor 1 can thus comprise of one single floor element 2, or multiple floor elements 2 that make up the floor 1. The latter situation is the preferred embodiment of the shed floor 1. The floor element 2 has multiple through holes 10 that open up to the reservoir 46 underneath the floor 1. The floor element 2 has a first surface 3 and a second surface 4. The first surface 3 forms the walking surface of the floor 1. The second surface 4 faces the reservoir 46. The through holes 10 extend from the first surface 3 to the second surface 4 over the whole thickness of the floor element 2. Figures 2A to E show a through hole 10 along a cross section perpendicular to the first and second surfaces, i.e. the second cross section. A first cross section of the through hole, parallel to the first and/or second surfaces, is not shown in figures 2A to E. The second cross section shows a first partition 11 and a second partition 12, separated by a step 16. Figure 2A shows a first partition 11 that coincides with the opening 21 of the through hole. The second partition 12 is shaped as a dome, and widens from the step 16 towards the second surface 4. In Figs. 2B to 2E, the first partition 11 comprises an insert 20. The insert 20 has an opening 21, aligned and centered with respect to the first and second partition 11, 12 of the through hole 10. The first partition 11 has a constant first cross section, i.e. the dimensions of the first cross section at the first partition does not change when travelling along the thickness of the floor element. The first cross section of the first partition 11 may vary along the thickness of the floor element 2, especially when a draft angle of the floor element mold is needed for a cast concrete floor element 10.The second partition 12 has a varying first cross section, i.e. the dimensions of the first cross section at the second partition changes when travelling along the thickness of the floor element. The second cross section of the second partition 12 is shown as a truncated Λ-shape (capital letter lambda) in Fig. 2B to E, which could mean a truncated cone or truncated pyramid shape for the second partition, or any polyhedron having a truncated Λ-shaped (capital letter lambda) cross section. The slanting surface of the second partition 12 increase the area of the inner surface 14, such that more urine will vaporize along the flow path to the reservoir 46. Alternatively, the second partition 12 has a constant first cross section, i.e. the dimensions of the first cross section at the second partition 12 does not change when travelling along the thickness of the floor element 2, which would imply a cylindrical or cuboid shape of the second partition (cuboid including a rectangular box, square cuboid and a cube), or any polyhedron having a rectangular cross section.

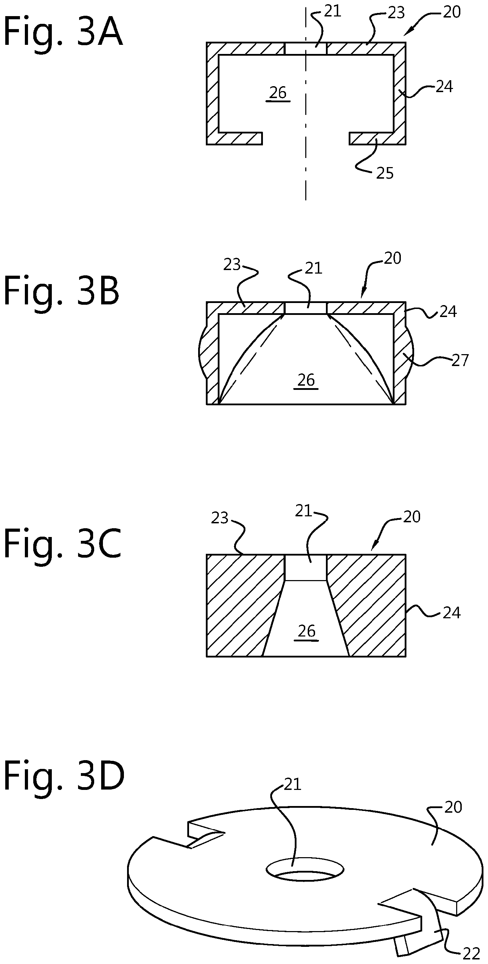

Fig. 2B shows the insert 20 as a plate-shaped cover having an opening 21 that opens into and aligned with the through hole. Urine 102 will flow through the opening 21 via the through hole 10 to the reservoir 46 underneath the floor element 2. The opening 21 is shaped such that feces 101 cannot pass and will remain on the first surface 3. The plate-shaped insert 20 of Fig. 2B can be cast into the concrete floor element 2. In order to anchor the plate shaped insert into the concrete, or any material that can be cast and is suitable for a shed floor, anchoring means 22 are provided as protrusions that are cut out and bend out of the plane of the plate shaped insert 20 and in the direction of a bottom side of the insert 20, as shown in Figure 3D. The protrusions will anchor the insert 20 to the floor element. The thickness of a plate shaped cover is between 0.9 and 2.1 mm and in particular about 1.5 mm. This will limit the vertical surface of the opening 21, such that the chances of feces accumulating to the vertical surface, or opening in general, are reduced. The insert 20 is supported by, or rests upon, the step 16 that divides the through hole 10 into the first and second partitions 11, 12.

Fig. 2C shows a further embodiment of the floor element 2, wherein the insert 20 has a plate shaped cover, but now also includes a lining element 13 that lines the inner surface 14 of the through hole 10. The lining element 13 and the cover form an integrated unit that is cast into the floor element 2 in its entirety.

Fig. 2D shows another embodiment of the floor element 2, wherein the first partition is enlarged with respect to the first partition of Figs. 2A to C to accommodate an insert 20 having a top side 23 and a peripheral upstanding wall 24 that extends from the top side 23 into the first partition. The opening 21 is provided in the top side 23 and is aligned and centered with respect to the first and second partitions 11, 12 of the through hole 10. The insert 20 rests on the step 16 through the peripheral wall 24. The inner surface 14 of the through hole 10 has a spiral or thread 29 that leads from the step 16 to the mouth of the through hole 10 at the second surface 4. The thread 29 will further increase the area of the inner surface 14, and will increase the speed at which urine 102 will travel though the through hole 10 from the first surface to the reservoir 46.

Fig. 2E shows an embodiment of the floor element 2 that combines the embodiments of Figs. 2C and 2D. The lining element 13 lining the inner surface 14 of the through hole 10 is now provided with the thread 29. The insert 20 is how shaped as a block material having the opening 21 shaped as a cylindrical through hole in the insert 20. The insert 20 can be formed of a flexible material, such as a rubber or elastomer that will deform under the weight of an animal when a leg is put (partially) on the insert 20. This deformation will assist in loosening any feces that has accumulated on and in the insert 20. The opening 21 is centered and aligned with the first and second partition 11, 12 of the through hole 10. The top side 23 of the insert 20 is offset from the first surface 3, i.e. is not flush. The offset can either be that the insert has a height lower than the depth of the first partition, i.e. the insert 20 is recessed with respect to the first surface 3, or that the insert 20 has a height higher than the depth of the first partition, i.e. the top surface 27 of the insert 20 extends beyond the first surface 3. The latter version has the advantage that when using a rubber or elastomer solid insert, as shown in Figs. 2E and 3C, the insert 20 will more likely be deformed when an animal (partially) accesses the insert with a leg.

The embodiments as shown in Figure 2 can be combined with each other, but also with any additional features, either shown or not shown in the figures.

Figure 3 shows a number of variations for the insert 20. Fig. 3A shows an insert 20 that has a top side 23 and an upstanding peripheral wall 24. The opening 21 is provided and centered in the top side 23. The insert 20 is also provided with a peripheral flange 25 that extends from an edge of the wall 24 into the interior 26 of the insert 20. The flange 25 will be used to support the insert 20 on the step 16 of the through hole 10, and forms (part of) a bottom side of the insert.

Fig. 3B shows an insert 20 that has a top side 23 and an upstanding peripheral wall 24. The opening 21 is provided and centered in the top side 23. The peripheral wall 24 forms an exterior surface of the insert 20. The wall 24 is provided with protrusions 27 that extend from the peripheral wall 24. These protrusions 27 are used to clamp fit the insert 20 into the first partition 11 of the through hole 10. The interior 26 of the insert has a dome shape (solid line) or a frustum shape (dotted line) to increase the area of the inner surface of the insert 20. The shaped interior may extend from the opening to the edge of the wall 24, but can also extend from the opening 21 to an edge of the flange 25, as shown in Fig. 3A. This combines the variations of Figs. 3A and 3B. An example of such a combination is shown in Fig. 3C, where the wall 24 extends into the interior 26 of the insert 20, thereby forming a frustum in the interior, and virtually extending the opening 21 through the entire thickness of the insert.

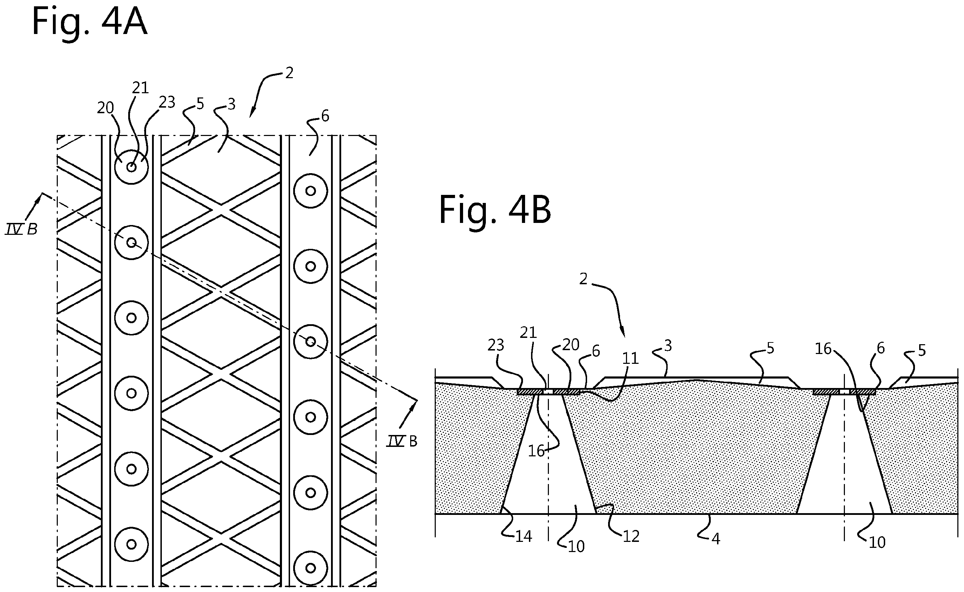

Figure 4 shows another embodiment of the floor element 2 according to the invention. The first surface 3 of a floor element 2 can be quite smooth after manufacturing. As this surface will be the walking surface for the animals, and the surface receiving the feces 101 and urine 102, a smooth surface can become slippery and thus prone to accidents. To overcome this risk, the first surface 3 comprises notches 5 that form an intersecting pattern on the floor element 2. The notches 5 have varying depth, such that the base of the notches has a slope from a relatively small off set from the first surface, i.e. a notch represents an indentation with a depth different from zero, to a depth flush with a gutter 6 in the floor element 2. The gutter 6 extends from one edge to another edge of the floor element, preferably in a straight fashion. One or more gutters 6 can be provided in each floor element 2. The bottom of the gutter 6 is formed by recessing the first surface 3. The through holes 10 are provided in the gutter 6. The gutter 6 and its bottom form part of the walking surface of the floor element 2. The notches 5 and gutter 6 provide an improved flow of urine and air into the reservoir 46.

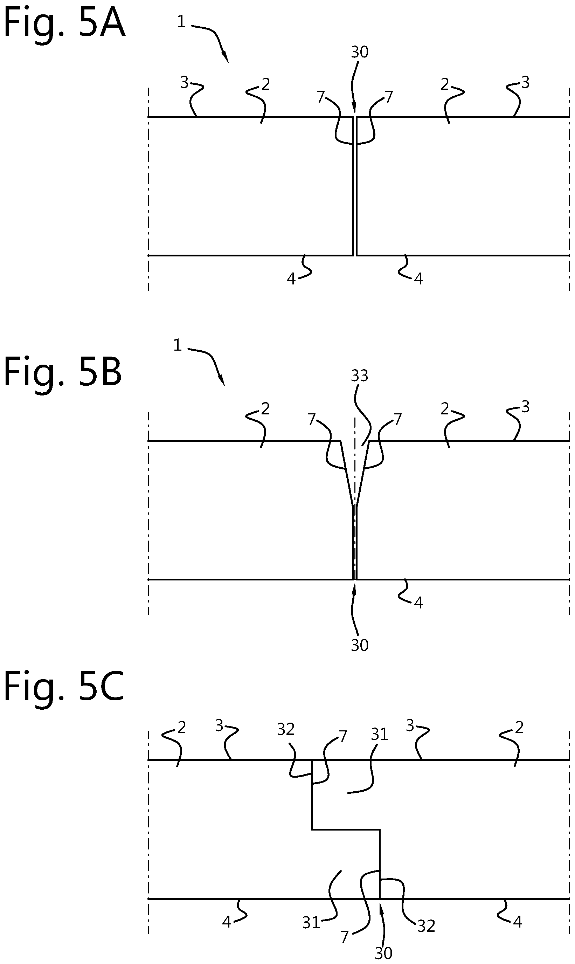

Figure 5 shows several embodiments of engaging two floor elements according to the inventions. When a floor 1 comprises two or more floor elements 2, the floor elements 2 need to be engaged with each other to form a floor 1 for an animal shed. Fig. 5A shows a simple configuration, where the side edges 7 of two neighboring floor elements 2 are adjacent to each other to form a straight interface 30 extending in a straight and perpendicular fashion from the first surface 3 to the second surface 4.

Fig. 5B shows a configuration where the edges 7 of the two floor elements have a slant and face away from each other, forming a V-shaped groove 33 between the two floor elements 2 that is at its widest at the first surface 3 and at its smallest at the second surface 4, and may even form an interface 30 at a distance different from zero from either surfaces.

Fig. 5C shows a configuration of two floor elements 2 where a first side edge 7 has a protrusion 31 extending from the first side edge at the first surface 3, and wherein the second side edge 7 has a notch 32 extending into the second side edge and the first surface 3. The protrusion 31 and the notch 32 have accommodating shapes, such that when the protrusion 31 and the notch 32 engage, the first surfaces 3 of the two floor elements 2 are flush, see Fig. 5C. In this figure, the notch and protrusion extend over half of the edge or side edge 7 of each floor element 2. It is also possible that the notch and protrusion extend over less of the edge 7, thus forming smaller engagement means for the floor elements 2.

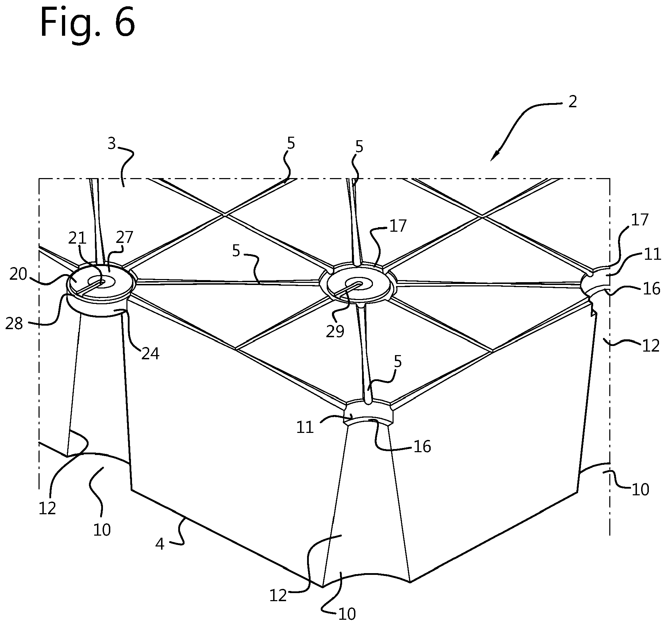

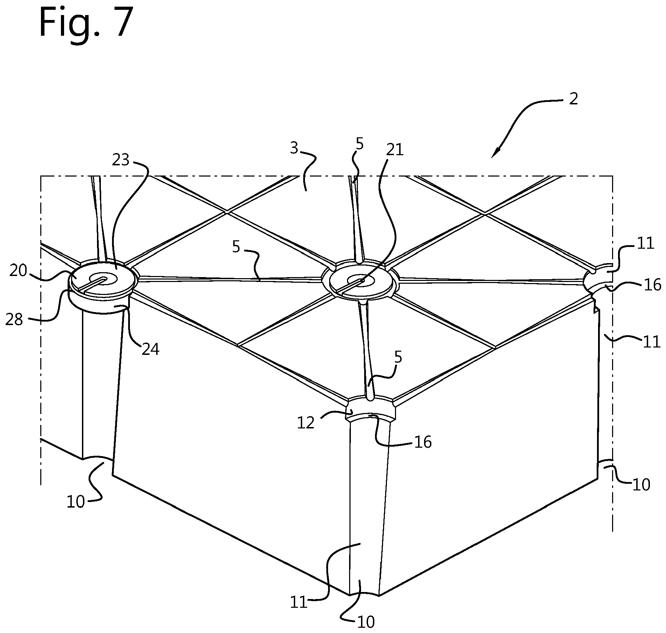

Figures 6 and 7 show an embodiment of the floor element 2 wherein a pattern of intersecting notches 5 is provided. The notches 5 open out into the through hole 10. The through hole 10 is provided with a peripheral recess 17 at a peripheral edge a the first floor, and the peripheral recess extending into the first partition 11, and opens out into the through hole 10. The notches 5 open out into the peripheral recess 17 of the through hole 10.

The insert 20 comprises a peripheral first recess 28 at a peripheral edge of the insert 20 and opening out towards the first partition 11 when inserted in to the through hole 10. The peripheral first recess 28 of the insert 20 and the peripheral recess 17 provided at a peripheral edge of the through hole 10 form a channel surrounding and enclosing the insert 20. The insert 20 further comprises a second recess 29 extending from the peripheral first recess 28 to the opening 21 in the insert 20 along a top side 27 of the insert 20. The second recess 29 forms a channel for guiding urine into the opening 21 of the insert. The second recess 29 of the insert is aligned with one of the notches 5 opening out into the through hole 10.

In Fig. 6, the second partition 12 is shaped as a truncated cone, having a narrower base at the step 16 and a wider base at the second surface 4. In contrast, Fig. 7 shows the second partition 12 shaped as a truncated cone, having a wider base at the step 16 and a narrower base at the second surface 4. The truncated cone is thus inverted in Fig. 7 with respect to what is shown in Fig. 6.

### LIST OF ITEMS

| | | | |
|---|---|---|---|
| 1. | Floor | 40. | Animal shed system |
| 2. | Floor element | 41. | Animal space |
| 3. | First surface / walking surface | 42. | Air extraction device |
| 4. | Second surface | 43. | Blower |
| 5. | Notch | 44. | Air washer / scrubber |
| 6. | Gutter | 45. | Sprayer |
| 7. | Floor element side edge | 46. | Reservoir |
| | | 47. | Pump |
| 10. | Through hole | 48. | Packed bed |
| 11. | First partition | 49. | Outlet |
| 12. | Second partition | | |
| 13. | Lining element | 100. | Manure suction robot |
| 14. | Inner surface | 101. | Feces |
| 15. | Spiral / thread | 102. | Urine |
| 16. | Step | | |
| 17. | Peripheral recess | | |
| 20. | Insert | | |
| 21. | Opening | | |
| 22. | Anchoring means | | |
| 23. | Top side | | |
| 24. | Peripheral wall | | |
| 25. | Flange | | |
| 26. | Insert interior | | |
| 27. | Insert protrusion | | |
| 28. | Peripheral first recess | | |
| 29. | Second recess | | |
| 30. | Interface | | |
| 31. | Floor element protrusion | | |
| 32. | Floor element notch | | |
| 33. | Groove | | |

## Claims

1. Floor (1) for an animal shed having a reservoir underneath the floor, the floor comprising at least one floor element (2), the element comprising:
- a first and a second surface (3, 4) spaced apart, such that the floor element has a thickness different from zero, wherein the second surface faces the reservoir; and
- multiple through holes (10) extending from the first to the second surface, and in use opening up to the reservoir, and having a first cross section in a plane parallel to the first and/or second surface, a second cross section perpendicular to the first and/or second surface, and an interior surface (14);
wherein the first cross section changes in dimension over the thickness of the floor element, wherein the through hole has a step (16) in the interior surface at a distance different form zero from the first and second surface, thus dividing the through hole into a first partition (11) extending from the first surface (3) to the step, and a second partition (12) extending from the step to the second surface (4), wherein the through hole comprises an opening that opens out to the first surface, which opening is relatively narrow at at least the first surface, such that urine is allowed to flow into the through hole at the first surface to the reservoir, and feces remains on the first surface when the floor is in use, wherein at least the first partition is provided with an insert (20), wherein the insert is supported by the step and wherein an opening (21) of the insert forms the opening of the through hole, wherein the floor element is made of concrete and the insert is formed of a flexible material.

2. Floor according to claim 1, wherein an opening of the through hole at the second surface is wider than then the opening of the through hole at the first surface.

3. Floor according to any of the preceding claims, wherein a top side (23) of the insert is flush with the first surface of the floor element, and a bottom side of the insert faces towards the second surface of the floor element.

4. Floor according to any of claims 1 to 3, wherein a top side (23) of the insert is offset from the first surface of the floor element, and a bottom side of the insert faces towards the second surface of the floor element.

5. Floor according to any of the preceding claims, wherein the second partition is shaped as a frustum extending from the step to the second surface, forming a truncated Λ (capital letter lambda) or V-shape along the second cross section of the through hole.

6. Floor according to any of the preceding claims, wherein the interior surface of the through hole is lined with a lining element (13).

7. Floor according to any of the preceding claims, wherein the insert is plate shaped and has similar width dimensions as the first partition, such that the insert has a form fit with the first partition.

8. Floor according to any of the preceding claims, wherein the insert is removably inserted into the first partition.

9. Floor according to any of claims 1-7, wherein the insert is cast into the first partition of the through hole.

10. Floor according to any of the preceding claims, wherein the multiple through holes are arranged in a pattern across the floor element.

11. Floor according to any of the preceding claims, wherein the first surface comprises a pattern of intersecting notches (5) having a depth with respect to the first surface, wherein the notches open out towards and into the through hole.

12. Floor according to any of the preceding claims, comprising at least two floor elements, wherein each floor element has side edges, and wherein at least a first side edge of a first floor element forms an interface (30) with a second side edge from a second floor element.

13. Animal shed (41) comprising a floor according to any of the preceding claims, and a reservoir underneath the floor.

14. Animal shed system (40) comprising a floor (1) according to any of the claims 1-12, or an animal shed (41) according to claim 13, wherein the shed system comprises:
- a reservoir underneath the floor;
- an air extraction device (42) for extracting air underneath the floor, out of the reservoir (46), thereby creating a lower pressure under the floor relative to the pressure above the floor; and
- an air washer (44) coupled to the air extraction device to capture ammonia present in the extracted air.

## Patentansprüche

1. Boden (1) für einen Tierstall mit einem Reservoir unter dem Boden, wobei der Boden mindestens ein Bodenelement (2) umfasst, wobei das Element Folgendes umfasst:
- eine erste und eine zweite Fläche (3, 4), die voneinander beabstandet sind, so dass das Bodenelement eine von null verschiedene Dicke hat, wobei die zweite Fläche dem Reservoir zugewandt ist, und
- mehrere Durchgangslöcher (10), die sich von der ersten zu der zweiten Fläche erstrecken und im Gebrauch zu dem Reservoir hin offen sind und einen ersten Querschnitt in einer parallel zu der ersten und/oder zweiten Fläche verlaufenden Ebene, einen senkrecht zu der ersten und/oder zweiten Fläche verlaufenden zweiten Querschnitt und eine Innenfläche (14) aufweisen,
wobei sich die Abmessung des ersten Querschnitts über die Dicke des Bodenelements ändert, wobei das Durchgangsloch in einem von null verschiedenen Abstand von der ersten und zweiten Fläche eine Stufe (16) in der Innenfläche hat, wodurch das Durchgangsloch in eine sich von der ersten Fläche (3) zu der Stufe erstreckende erste Unterteilung (11) und eine sich von der Stufe zu der zweiten Fläche (4) erstreckende zweite Unterteilung (12) unterteilt wird, wobei das Durchgangsloch eine Öffnung umfasst, die zu der ersten Fläche hin mündet, wobei diese Öffnung an mindestens der ersten Fläche relativ schmal ist, so dass Urin in das Durchgangsloch an der ersten Fläche zu dem Reservoir fließen kann und Kot auf der ersten Fläche verbleibt, wenn der Boden in Gebrauch ist, wobei mindestens die erste Unterteilung mit einem Einsatz (20) versehen ist, wobei der Einsatz von der Stufe gestützt wird und wobei eine Öffnung (21) des Einsatzes die Öffnung des Durchgangslochs bildet, wobei das Bodenelement aus Beton hergestellt ist und der Einsatz aus einem flexiblen Material hergestellt ist.

2. Boden nach Anspruch 1, wobei eine Öffnung des Durchgangslochs an der zweiten Fläche breiter als die Öffnung des Durchgangslochs an der ersten Fläche ist.

3. Boden nach einem der vorhergehenden Ansprüche, wobei eine obere Seite (23) des Einsatzes bündig mit der ersten Fläche des Bodenelements ist und eine untere Seite des Einsatzes der zweiten Fläche des Bodenelements zugewandt ist.

4. Boden nach einem der Ansprüche 1 bis 3, wobei eine obere Seite (23) des Einsatzes von der ersten Fläche des Bodenelements versetzt ist und eine untere Seite des Einsatzes der zweiten Fläche des Bodenelements zugewandt ist.

5. Boden nach einem der vorhergehenden Ansprüche, wobei die zweite Unterteilung als ein Kegelstumpf ausgebildet ist, der sich von der Stufe zu der zweiten Fläche erstreckt und ein abgestumpftes A (großes Lambda) oder eine abgestumpfte V-Form entlang des zweiten Querschnitts des Durchgangslochs bildet.

6. Boden nach einem der vorhergehenden Ansprüche, wobei die Innenfläche des Durchgangslochs mit einem Auskleidungselement (13) ausgekleidet ist.

7. Boden nach einem der vorhergehenden Ansprüche, wobei der Einsatz plattenförmig ist und ähnliche Breitenabmessungen wie die erste Unterteilung hat, so dass der Einsatz mit der ersten Unterteilung formschlüssig ist.

8. Boden nach einem der vorhergehenden Ansprüche, wobei der Einsatz entfernbar in die erste Unterteilung eingesetzt ist.

9. Boden nach einem der Ansprüche 1 - 7, wobei der Einsatz in die erste Unterteilung des Durchgangslochs einbetoniert ist.

10. Boden nach einem der vorhergehenden Ansprüche, wobei die mehreren Durchgangslöcher in einem Muster über das Bodenelement hinweg angeordnet sind.

11. Boden nach einem der vorhergehenden Ansprüche, wobei die erste Fläche ein Muster aus sich kreuzenden Kerben (5) umfasst, die bezüglich der ersten Fläche eine Tiefe haben, wobei die Kerben zu dem Durchgangsloch hin und in dieses hinein münden.

12. Boden nach einem der vorhergehenden Ansprüche, umfassend mindestens zwei Bodenelemente, wobei jedes Bodenelement Seitenränder hat und wobei mindestens ein erster Seitenrand eines ersten Bodenelements eine Schnittstelle (30) mit einem zweiten Seitenrand von einem zweiten Bodenelement bildet.

13. Tierstall (41), umfassend einen Boden nach einem der vorhergehenden Ansprüche und ein Reservoir unter dem Boden.

14. Tierstallsystem (40), umfassend einen Boden (1) nach einem der Ansprüche 1 - 12 oder einen Tierstall (41) nach Anspruch 13, wobei das Stallsystem Folgendes umfasst:
- ein Reservoir unter dem Boden,
- eine Luftabzugsvorrichtung (42) zum Abziehen von Luft unter dem Boden aus dem Reservoir (46), wodurch in Bezug auf den Druck über dem Boden ein niedrigerer Druck unter dem Boden entsteht, und
- einen an die Luftabzugsvorrichtung gekoppelten Luftwäscher (44) zum Abfangen von in der abgezogenen Luft vorliegendem Ammoniak.

## Revendications

1. Plancher (1) pour un bâtiment d'élevage ayant un réservoir sous le plancher, le plancher comprenant au moins un élément de plancher (2), l'élément comprenant :
une première et une seconde surface (3, 4) espacées, de sorte que l'élément de plancher a une épaisseur différente de zéro, la seconde surface faisant face au réservoir ; et
de multiples trous traversants (10) s'étendant de la première à la seconde surface et lors de l'utilisation s'ouvrant sur le réservoir, et présentant une première section transversale dans un plan parallèle à la première et/ou à la seconde surface, une seconde section transversale perpendiculaire à la première et/ou à la seconde surface, et une surface intérieure (14) ;
la première section transversale changeant de dimension sur l'épaisseur de l'élément de plancher, le trou traversant ayant une marche (16) dans la surface intérieure à une distance différente de zéro à partir de la première et de la seconde surface, divisant ainsi le trou traversant en un premier compartiment (11) s'étendant de la première surface (3) à la marche, et un second compartiment (12) s'étendant de la marche à la seconde surface (4), le trou traversant comprenant une ouverture qui s'ouvre sur la première surface, laquelle ouverture est relativement étroite au moins au niveau de la première surface, de sorte que l'urine puisse s'écouler dans le trou traversant au niveau de la première surface vers le réservoir, et que les matières fécales restent sur la première surface lorsque le plancher est utilisé, au moins le premier compartiment étant pourvu d'un insert (20), l'insert étant soutenu par la marche et une ouverture (21) de l' insert formant l'ouverture du trou traversant, l'élément de plancher étant en béton et l'insert étant formé d'un matériau flexible.

2. Plancher selon la revendication 1, une ouverture du trou traversant au niveau de la seconde surface étant plus large que l'ouverture du trou traversant au niveau de la première surface.

3. Plancher selon l'une quelconque des revendications précédentes, un côté supérieur (23) de l'insert affleurant la première surface de l'élément de plancher, et un côté inférieur de l' insert étant orienté vers la seconde surface de l'élément de plancher.

4. Plancher selon l'une quelconque des revendications 1 à 3, un côté supérieur (23) de l' insert étant décalé par rapport à la première surface de l'élément de plancher, et un côté inférieur de l'insert étant orienté vers la seconde surface de l'élément de plancher.

5. Plancher selon l'une quelconque des revendications précédentes, le second compartiment ayant la forme d'un cône s'étendant de la marche à la seconde surface, formant un A tronqué (lettre majuscule lambda) ou une forme de V le long de la seconde section transversale du trou traversant.

6. Plancher selon l'une quelconque des revendications précédentes, la surface intérieure du trou traversant étant revêtue d'un élément de revêtement (13).

7. Plancher selon l'une quelconque des revendications précédentes, l'insert ayant la forme d'une plaque et présentant des dimensions de largeur similaires à celles du premier compartiment, de sorte que l'insert s'adapte à la forme du premier compartiment.

8. Plancher selon l'une quelconque des revendications précédentes, l'insert étant inséré amovible dans le premier compartiment.

9. Plancher selon l'une quelconque des revendications 1 à 7, l'insert étant coulé dans le premier compartiment du trou traversant.

10. Plancher selon l'une quelconque des revendications précédentes, les multiples trous traversants étant disposés selon un motif sur l'élément de plancher.

11. Plancher selon l'une quelconque des revendications précédentes, la première surface comprenant un motif d'encoches entrecroisées (5) ayant une profondeur par rapport à la première surface, les encoches s'ouvrant vers et dans le trou traversant.

12. Plancher selon l'une quelconque des revendications précédentes, comprenant au moins deux éléments de plancher, chaque élément de plancher ayant des bords latéraux, et au moins un premier bord latéral d'un premier élément de plancher formant une interface (30) avec un second bord latéral à partir d'un second élément de plancher.

13. Bâtiment d'élevage (41) comprenant un plancher selon l'une quelconque des revendications précédentes, et un réservoir situé sous le plancher.

14. Système de bâtiment d'élevage (40) comprenant un plancher (1) selon l'une quelconque des revendications 1 à 12, ou un bâtiment d'élevage (41) selon la revendication 13, le système de bâtiment d'élevage comprenant :
un réservoir sous le plancher ;
un dispositif d'extraction d'air (42) pour extraire l'air sous le plancher, hors du réservoir (46), créant ainsi une pression inférieure sous le plancher par rapport à la pression au-dessus du plancher ; et
un laveur d'air (44) accouplé au dispositif d'extraction d'air pour capturer l'ammoniac présent dans l'air extrait.
